# EUROPÄISCHE PATENTSCHRIFT

(11) **EP 2 742 158 B1**
(45) Veröffentlichungstag und Bekanntmachung des Hinweises auf die Patenterteilung: **26.08.2015**
(21) Anmeldenummer: 12743136.9
(22) Anmeldetag: 31.07.2012
(51) Int. Cl.: C21D 8/04, C21D 11/00, G05B 17/02, H05B 6/10, C21D 9/56

(54) **VERFAHREN ZUM BETRIEB EINER KONTI-GLÜHE FÜR DIE VERARBEITUNG EINES WALZGUTS**
METHOD FOR OPERATING A CONTINUOUS ANNEALING LINE FOR THE PROCESSING OF A ROLLED GOOD
PROCÉDÉ PERMETTANT DE FAIRE FONCTIONNER UNE LIGNE DE RECUIT CONTINU POUR LE TRAITEMENT D'UN PRODUIT LAMINÉ

(30) Priorität: 12.08.2011 EP 11177403
(43) Veröffentlichungstag der Anmeldung: 18.06.2014
(73) Patentinhaber: Primetals Technologies Germany GmbH, 91052 Erlangen (DE)
(72) Erfinder: RÖSSIGER, Martin, 91054 Erlangen (DE); WINTER, Günther, 91077Neunkirchen/Brand (DE)
(74) Vertreter: Metals@Linz
(86) Internationale Anmeldenummer: PCT/EP2012/064959
(87) Internationale Veröffentlichungsnummer: WO 2013/023903

(56) Entgegenhaltungen:
- EP-A1- 1 496 129
- EP-A1- 2 177 892
- EP-A1- 2 287 345
- EP-B1- 1 711 868
- WO-A1-2004/050923
- WO-A2-2007/051521
- JP-A- 7 246 407
- US-A- 5 770 838

## Beschreibung

Die Erfindung betrifft ein Verfahren zum Betrieb einer Konti-Glühe für die Verarbeitung eines Walzguts, insbesondere eines metallischen Bands. Die Erfindung betrifft weiterhin ein Computerprogramm, eine Steuereinrichtung für eine Konti-Glühe sowie eine Konti-Glühe.

Nach dem Warm- und Kaltwalzen eines metallischen Bands z.B. aus Stahl, wird das Band einer Wärmebehandlung unterzogen, um im Band gewünschte Werkstoffeigenschaften einzustellen. Industriell erfolgt die Wärmebehandlung z.B. in einer so genannten Konti-Glühe (engl. continuous annealing line). In der Konti-Glühe wird das Band abgewickelt und durchläuft kontinuierlich einen Ofen.

Bei der Wärmebehandlung in der Konti-Glühe wird angestrebt bei einem möglichst großen Durchsatz die einzelnen Bänder mit möglichst gleichbleibender, hoher Qualität sowohl innerhalb eines Bands als auch von Band zu Band zu veredeln. Dafür werden für jede Stahlgüte die Prozessparameter beim Glühprozess entsprechend eingestellt. Diese sind vor allem die Bandgeschwindigkeit und der Temperaturverlauf beim Glühen, d.h. die Temperatur der einzelnen Aufheiz- und Abkühlabschnitte innerhalb der Konti-Glühe. Diese Prozessparameter werden in der Regel vom Ofenhersteller und/oder vom Betreiber vorgegeben und bleiben meist unverändert für eine Stahlgüte. Wenn eine neue Stahlgüte hinzukommt, so werden die Prozessparameter auf der Grundlage von Prozesserfahrungen und Experimenten neu bestimmt.

Aus der EP 2 177 892 A1 ist ein Verfahren bekannt, bei dem auf Grund von Messdaten eines Stahlblechs an einem Dressiergerüst hinter einer Konti-Glühe-Linie mechanische Eigenschaften des Stahlblechs berechnet und an einen Benutzer weitergeleitet werden. Der Benutzer kann die Information über die berechneten mechanischen Eigenschaften verwenden, indem er z.B. die Betriebsbedingungen der Stahl-Produktionslinie anpasst. Es erfolgt dabei eine Feedback-Steuerung, welche sich erst auf neue Abschnitte des Stahlblechs auswirkt.

Der Erfindung liegt die Aufgabe zugrunde, eine präzise Regelung eines Glühprozesses zu ermöglichen.

Die Aufgabe wird erfindungsgemäß gelöst durch ein Verfahren zum Betrieb einer Konti-Glühe für die Verarbeitung eines Walzguts, insbesondere eines metallischen Bands, wobei im Hinblick auf eine modellprädiktive Regelung
- als Eingangsgröße mindestens eine Eigenschaft des Walzgutes bezogen auf mindestens einen Punkt oder mindestens einen Abschnitt des Walzguts einem computergestützten Modell (zugeführt wird, wobei sich der mindestens eine Punkt oder der mindestens eine Abschnitt des Walzguts vor oder in der Konti-Glühe befindet,
- mit Hilfe des computergestützten Modells mindestens eine Materialeigenschaft des Walzguts nach dem Konti-Glühe-Prozess simuliert wird,
- die simulierte Materialeigenschaft mit einem vorgegebenen Sollwert verglichen wird,
- und bei Abweichungen der simulierten Materialeigenschaft vom Sollwert mindestens eine Prozessgröße des Konti-Glühe-Prozesses geregelt wird, solange der mindestens eine Punkt oder der mindestens eine Abschnitt des Walzguts sich vor oder in der Konti-Glühe befindet.

Die Erfindung basiert auf der Idee, ein computergestütztes Modell zur Verfügung zu stellen, welches sich für eine modellprädiktive Regelung des Konti-Glühe-Prozesses eignet, so dass die Regelung auf Basis der simulierten Ergebnisse für die Materialeigenschaft erfolgt. Das computergestützte Modell modelliert die Materialeigenschaften des Walzguts nach der Konti-Glühe. Das Modell enthält dabei insbesondere einen oder mehrere einstellbare Modellparameter. Solche Modellparameter sind z.B. eine Geschwindigkeit des Kornwachstums oder eine Geschwindigkeit der Phasenumwandlung des Metallbands.

Als Eingangsgrößen für das Modell dienen Eigenschaften des Walzguts, wie z.B. seine Legierungsanteile oder wenigstens die Stahlgruppe, seine Oberflächenrauhigkeit, seine Dicke und/oder seine Korngröße vor der Konti-Glühe. Die Eingangsgrößen sind somit insbesondere bandspezifisch. Die Eingangsgröße kann sich dabei jedoch auf mehrere Punkte oder Abschnitte des Bands, insbesondere auf das gesamte Band, beziehen, z.B. wenn die Eingangsgröße die chemische Zusammensetzung des Stahls bzw. die Stahlgruppe ist.

Das Modell simuliert den Konti-Glühe-Prozess und dabei werden die Qualitätsparameter des Walzguts nach der Konti-Glühe vorhergesagt. Der Sollwert stellt dabei insbesondere eine Qualitätsnorm oder eine gewünschte Qualität dar. Der Sollwert kann hierbei auch ein Bereich und nicht nur ein absoluter Wert sein. Bei einem Vergleich der simulatorisch vorhergesagten Materialeigenschaften mit vorgegebenen Sollwerten für die vorliegende Stahlgüte kann sich unter Umständen eine Differenz ergeben, die es zu minimieren gilt. Dabei werden die Prozessparameter des Konti-Glühe-Prozesses, wie z.B. die Bandgeschwindigkeit im Ofen oder der Temperaturverlauf während der Wärmebehandlung entsprechend verändert. Es erfolgt somit eine kontinuierliche Regelung der Prozessparameter in Echtzeit, die zu einer gewünschten Qualität des Walzguts führt.

Bei der vorgeschlagenen modellprädiktiven Regelung wird also nicht auf die tatsächlichen Eigenschaften des Walzguts nach der Konti-Glühe geregelt, sondern es wird auf ein mit Hilfe des computergestützten Modells vorhergesagtes Ergebnis für die Materialeigenschaften geregelt. Das Ergebnis für die Materialeigenschaften des Walzguts nach der Wärmebehandlung wird somit bereits berechnet, wenn ein Punkt oder Abschnitt des Walzguts, für den die Eingangsgrößen ermittelt sind, sich vor bzw. noch am Anfang des Konti-Glühe-Prozesses befindet, bzw. wenn die Eingangsgröße sich auf das gesamte Walzgut bezieht, bevor ein Teil des Walzguts die Konti-Glühe durchlaufen hat. Damit ist eine optimale Steuerung bzw. Regelung der Prozessparameter während der Wärmebehandlung in der Konti-Glühe möglich, die zu einer genauen Kontrolle der nach der Wärmebehandlung einzustellenden Materialeigenschaften führt.

Ergänzend zu den bandspezifischen Eingangsgrößen wird vorteilhafterweise als Eingangsgröße zusätzlich mindestens eine Prozessgröße eines Vorprozesses der Konti-Glühe verwendet. Vorprozesse sind in diesem Fall z.B. ein Warmwalzen oder ein Kaltwalzen des Walzguts. Als Eingangsgröße kann dabei beispielsweise eine Haspeltemperatur verwendet werden oder die Walzkräfte in einer vorgeordneten Fertigstraße. Auch hierbei kann sich die Eingangsgröße insbesondere auf das gesamte Band beziehen.

Ebenfalls können die zu regelnden Prozessgrößen wie beispielsweise die Temperatur in der Konti-Glühe dem Modell als Eingangsgröße zugeführt werden. Die zu regelenden Prozessgrößen oder andere mit diesen korrelierten Größen werden dabei insbesondere gemessen.

Die mindestens eine Eingangsgröße kann gemessen werden oder aus Mess- oder Simulationsdaten der Vorprozesse extrahiert werden. Nach einer bevorzugten Variante wird die Eingangsgröße insbesondere unmittelbar vor der Konti-Glühe gemessen. Bevorzugt wird die Eingangsgröße durch eine Messung der magnetischen Remanenz oder der Oberflächenrauhigkeit des Walzguts ermittelt. Entsprechend ist vor der Konti-Glühe eine Vorrichtung zur Bestimmung der magnetischen Remanenz oder der Oberflächenrauhigkeit vorgesehen. Der Vorteil dieser Messungen ist, dass sie zerstörungsfrei sind und dass sie am laufenden Band durchgeführt werden können. Die magnetische Remanenz stellt den Restmagnetismus dar, den das zuvor magnetisierte Walzgut nach Entfernen des Magnetfeldes behält. Die magnetische Remanenz des Walzguts ist mit Materialeigenschaften des Walzguts korreliert, so dass über die magnetische Remanenz insbesondere eine Korn- oder Partikelgröße der Metallstruktur des Walzguts ermittelt wird, die als Eingangsgröße dem Modell zugeführt wird.

Alternativ oder ergänzend zur direkten oder indirekten Messung von Eigenschaften des Walzguts, die als Eingangsgrößen verwendet werden, wird die Eingangsgröße, unabhängig davon, ob sie eine band- oder prozessspezifische Größe ist, nach einer weiteren bevorzugten Variante aus Prozessdaten des Vorprozesses ermittelt. Beim Vorprozess, z.B. beim Kaltwalzen, werden unter Umständen ebenfalls Modelle zur Berechnung bestimmter Walzguteigenschaften bzw. zur Regelung von Prozessparametern angewendet. Aus den Prozessdaten dieser Modelle werden Informationen über die Eingangsgrößen für die modellprädiktive Regelung der Konti-Glühe gewonnen.

Sowohl bei den gemessenen als auch bei den berechneten Eingangsgrößen kann es vorkommen, dass diese nicht exakt bestimmt werden können, wobei jedoch ein Bereich ermittelt wird, in dem sie sich bewegen (z.B. nach Art einer Häufigkeitsverteilung). Wenn lediglich ein Bereich für die Eingangsgröße bestimmt wird, wird vorteilhafterweise die mindestens eine Prozessgröße ausgehend vom ungünstigsten Wert im Bereich geregelt. Die Regelung erfolgt dann derart, dass ein möglichst großer Bereich der möglichen Eingangsgrößen-Schwankungen abgedeckt ist, d.h. es wird insbesondere über den gesamten Bereich der Eingangsgröße modelliert, um den ungünstigsten Wert in diesem Bereich zu ermitteln, und schließlich wird mit diesem Wert geregelt. Beispielsweise wird als Eingangsgröße ein Perlit-Lamellenabstand verwendet. Es gilt, dass je geringer der Lamellenabstand, desto geringer die erforderliche Glühzeit zur Austentisierung des Stahles ist. Wenn der Lamellenabstand nicht exakt bestimmt werden kann, jedoch in einem Schwankungsbereich ermittelbar ist, gemäß der vorgeschlagenen modellprädiktiven Regelung wird dabei ausgehend vom ungünstigsten möglichen Perlit-Lamellenabstand innerhalb des Schwankungsbereichs die Glüh-Zeit zur Austentisierung vorhergesagt.

Gemäß einer bevorzugten Ausführung umfasst das Modell einen oder mehrere Modellparameter und die simulierte Materialeigenschaft nach dem Konti-Glühe-Prozess wird gemessen und bei einer Abweichung der simulierten Materialeigenschaft von der gemessenen Materialeigenschaft wird mindestens ein Modellparameter angepasst. Wird z.B. nach der Konti-Glühe eine kleinere Korngröße als simuliert ermittelt, so kann im Modell die Geschwindigkeit des Kornwachstums entsprechend verringert werden.

Zweckdienlicherweise wird mit Hilfe des rechnerischen Modells als Materialeigenschaft eine Oberflächenrauhigkeit, eine Streckgrenze und/oder eine Zugfestigkeit des Walzguts berechnet. Für diese Materialeigenschaften gibt es in der Regel festgelegte Qualitätsnormen, welche bei der Simulation als Sollwert herangezogen werden.

Bevorzugt wird im Hinblick auf eine indirekte Bestimmung der Materialeigenschaft eine Zwischengröße mittels des Modells berechnet, wobei die Zwischengröße mit der Materialeigenschaft korreliert ist. Beispielsweise ist die Zwischengröße die Korngröße des Walzguts nach dem Konti-Glühe-Prozess. Diese Korngröße wird im Modell simuliert und auf Basis der Korngröße werden die gewünschten Materialeigenschaften, wie z.B. Streckgrenze oder Zugfestigkeit, bestimmt.

Die Aufgabe wird weiterhin erfindungsgemäß gelöst durch ein Computerprogramm, das einen Maschinencode umfasst, der von einer Steuereinrichtung für ein Walzwerk unmittelbar abarbeitbar ist und dessen Abarbeitung durch die Steuereinrichtung bewirkt, dass die Steuereinrichtung ein Verfahren nach einer der obigen Ausführungen ausführt. Das Computerprogramm ist bevorzugt auf einem Datenträger in maschinenlesbarer Form gespeichert.

Die Aufgabe wird zudem erfindungsgemäß gelöst durch eine Steuereinrichtung die derart ausgebildet ist, dass sie im Betrieb ein Verfahren nach den oben genannten Ausführungen ausführt.

Schließlich ist die Aufgabe durch eine Konti-Glühe gelöst, die von einer derartigen Steuereinrichtung gesteuert wird.

Die im Zusammenhang mit dem Verfahren angeführten Vorteile und bevorzugten Ausführungen lassen sich sinngemäß auf das Computerprogramm, die Steuereinrichtung und die Konti-Glühe übertragen.

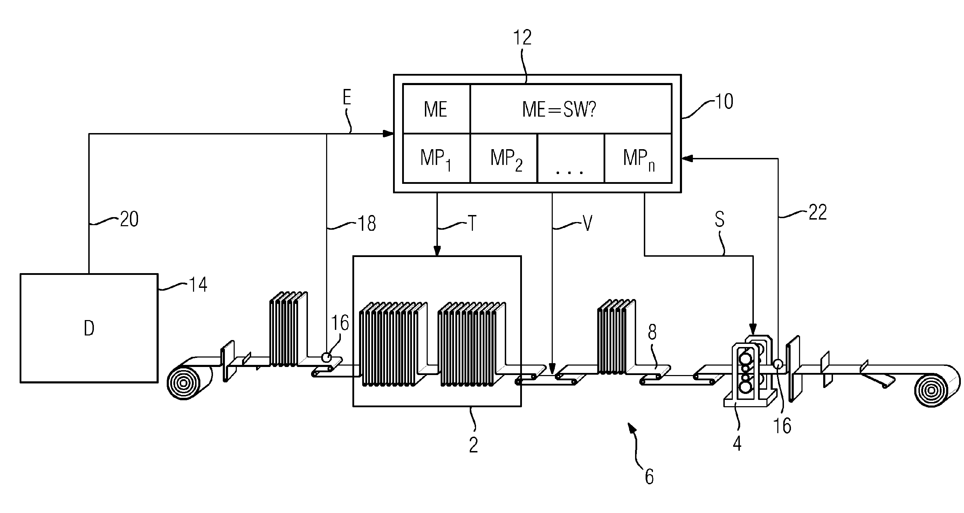

Ein Ausführungsbeispiel der Erfindung wird anhand einer Zeichnung näher erläutert. Hierin zeigt die einzige Figur schematisch und stark vereinfacht ein Verfahren zum Betrieb einer Konti-Glühe 2, die zusammen mit einem Dressiergerüst 4 Teil einer Behandlungslinie 6 ist. In der Behandlungslinie 6 wird ein Walzgut, hier ein Band 8 aus Stahl, einer Wärmebehandlung unterzogen. Die Regelung der Konti-Glühe 2 sowie des Dressiergerüsts 4 erfolgt dabei mit Hilfe einer Steuereinrichtung 10, welche ein Modell 12 umfasst.

Beim Einlaufen eines bestimmten Punktes oder Abschnitts des Bands 8 in die Konti-Glühe 2 werden Eingangsgrößen E bezogen auf diesen Punkt oder Abschnitt des Bands dem Modell 12 zugeführt. Die Eingangsgröße E ist insbesondere eine Materialeigenschaft des Bandes wie z.B. chemische Zusammensetzung, die Oberflächenrauhigkeit oder die Korngröße des Bands 8. Die Eingangsgröße kann sich auf einen Punkt, auf einen Abschnitt des Bandes oder alternativ auf das gesamte Band beziehen. Als Minimalerfordernis soll zumindest die Stahlgüte des Bands 8 die Eingangsgröße E bilden.

Im gezeigten Ausführungsbeispiel wird als Eingangsgröße E die Zugfestigkeit und/oder Streckgrenze des Bands 8 verwendet, die indirekt über die magnetische Remanenz des Bands 8 bestimmt wird. Die magnetische Remanenz wird mit Hilfe der Messvorrichtung 16, wie unmittelbar vor der Konti-Glühe 2 angeordnet ist, gemessen. Ein Messsignal 18 wird der Steuereinrichtung 10 zugefügt und das Messsignal 18 wird in der Steuereinrichtung 10 bearbeitet, so dass die gewünschte Eingangsgröße E ermittelt wird. Direkt und zerstörungsfrei kann als Eingangsgröße E auch die Oberflächenrauhigkeit des Bands 8 gemessen werden.

Die Korngröße des Bands 8 sowie weitere Eingangsgrößen, wie z.B. ein Perlit-Lamellenabstand, können ebenfalls aus Prozessdaten eines Vorprozesses 14 gewonnen werden, was in der Figur durch einen Pfeil 20 angedeutet ist. Aus dem Vorprozess 14 können für das Modell 12 nicht nur bandspezifische Daten herangezogen werden, sondern ebenfalls prozessspezifische Daten wie z.B. die Walzkräfte eines vorgeordneten Walzgerüsts bzw. die einzelnen Banddicken in den verschiedenen Stadien der Bandbearbeitung. Der Vorprozess ist im gezeigten Ausführungsbeispiel ein Kaltwalz-Prozess. Beim Kaltwalzen können ebenfalls Modelle zum Simulieren des Prozesses verwendet werden, welche Daten D erhalten, die unmittelbar oder mittelbar als Eingangsgrößen E für das Modell 12 verwendet werden können.

Ergänzend zu den bandspezifischen Eingangsgrößen E können auch prozessspezifischen Größen der Konti-Glühe 2 wie beispielsweise eine Temperatur eines Inertgases im Ofen der Konti-Glühe 2 weitere Eingangsgrößen für das Modell 12 bilden.

Im gezeigten Ausführungsbeispiel werden die Eingangsgrößen E sowohl durch Messungen als auch durch die Prozessdaten D aus dem Vorprozess 14 gewonnen. Denkbar ist jedoch auch, die Eingangsgrößen E nur durch eine dieser beiden Vorgehensweisen zu bestimmen.

Auf Basis der Eingangsgrößen E wird im Modell 12 eine Materialeigenschaft ME des Bands 8 nach der Konti-Glühe 2 simuliert. Die Materialeigenschaft ME ist z.B. eine Streckgrenze oder eine Zugfestigkeit des Bands 8 nach dem Dressiergerüst 4. Die Materialeigenschaft ME nach dem Glühen wird somit noch zu Beginn oder während der Wärmebehandlung in der Konti-Glühe 2 vorhergesagt. Die simulierte Materialeigenschaft ME wird mit einem vorgegeben Sollwert SW verglichen, um zu überprüfen, ob die Materialeigenschaft ME den Qualitätserfordernissen genügt. Sollte die simulierte Materialeigenschaft ME vom Sollwert SW abweichen, wird mindestens eine Prozessgröße der Behandlungslinie 6 bzw. der Konti-Glühe 2 gesteuert oder geregelt. Solche Prozessgrößen sind z.B. die Bandgeschwindigkeit V in der Konti-Glühe 2 oder in den restlichen Bereichen der Behandlungslinie 6 sowie der Temperaturverlauf T in der Konti-Glühe 2, wobei unter Temperaturverlauf T sowohl der räumliche als auch der zeitliche Temperaturverlauf zu verstehen ist. Durch ein Steuersignal S wird in der Figur eine Änderung von Prozessparametern des Dressiergerüsts 4 veranschaulicht.

Wenn eine Eingangsgröße E nicht genau bestimmt werden kann, sondern lediglich ein Bereich bekannt ist, in dem die Eingangsgröße E liegt, wird die Simulation mit Hilfe des Modells 12 insbesondere für alle und wenigstens für beide Grenzen des Bereichs durchgeführt. Für die Wärmebehandlung in der Konti-Glühe 2 wird dabei die Simulation mit dem ungünstigsten Wert des Bereichs für die Eingangsgröße E herangezogen und entsprechend wird mindestens ein Prozessparameter T, V, S, eingestellt.

Das Modell 12 umfasst eine Reihe von Modellparameter MP₁, MP₂, ..., MPₙ auf deren Basis die Simulation der Materialeigenschaft ME nach der Wärmebehandlung durchgeführt wird. Modellparameter MP sind z.B. die Geschwindigkeit des Kornwachstums während der Wärmebehandlung oder ein Korrekturfaktor für die Geschwindigkeit der Phasenumwandlung.

Die Modellparameter MP sind im gezeigten Ausführungsbeispiel einstellbar und werden in Abhängigkeit von einer tatsächlichen, gemessenen Materialeigenschaft angepasst. Beispielsweise ist unmittelbar nach dem Dressiergerüst 4 ebenfalls eine Messvorrichtung 16 zur Bestimmung der magnetischen Remanenz vorgesehen. Ein Messsignal 20 wird der Steuereinrichtung 10 zugeführt. Auf Basis des Messsignals 20 wird in der Steuereinrichtung 10 die tatsächliche Streckgrenze und/oder Zugfestigkeit des Bands 8 im Bereich des Dressiergerüsts 4 indirekt bestimmt. Die somit indirekt gemessene Streckgrenze wird mit der Streckgrenze verglichen, die simuliert wurde, als dieser Bandabschnitt sich am Anfang der Konti-Glühe befand. Bei Abweichungen der simulierten Streckgrenze von der gemessenen Streckgrenze werden ein oder mehrere Modellparameter MP angepasst, um die Präzision bei der modellprädiktiven Regelung der Wärmebehandlung des Stahlbands 8 zu erhöhen.

Dank der oben beschriebenen modellprädiktiven Regelung der Konti-Glühe 2 erfolgt eine kontinuierliche Echtzeitanpassung der aktuellen Prozessparameter T, V, S an die bandspezifischen Eingangsparameter E wodurch eine genauere Kontrolle der Materialeigenschaften (z.B. Streckgrenze, Zugfestigkeit) sowohl innerhalb des Bands als auch von Band zu Band erreicht wird. Alternativ oder ergänzend zur Regelung auf Qualitätsparameter kann mittels des Modells der Durchsatz durch die Behandlungslinie 6 gesteigert und damit der Energieverbrauch gesenkt werden.

## Patentansprüche

1. Verfahren zum Betrieb einer Konti-Glühe (2) für die Verarbeitung eines Walzguts (8), insbesondere eines metallischen Bands, wobei im Hinblick auf eine modellprädiktive Regelung
- als Eingangsgröße (E) mindestens eine Eigenschaft des Walzgutes bezogen auf mindestens einen Punkt oder mindestens einen Abschnitt des Walzguts (8) einem computergestützten Modell (12) zugeführt wird, wobei sich der mindestens eine Punkt oder der mindestens eine Abschnitt des Walzguts (8) vor oder in der Konti-Glühe (2) befindet,
- mit Hilfe des computergestützten Modells (12) mindestens eine Materialeigenschaft (ME) des Walzguts (8) nach dem Konti-Glühe-Prozess simuliert wird,
- die simulierte Materialeigenschaft (ME) mit einem vorgegebenen Sollwert (SW) verglichen wird,
- und bei Abweichungen der simulierten Materialeigenschaft (ME) vom Sollwert (SW) mindestens eine Prozessgröße (T, V) des Konti-Glühe-Prozesses durch eine Steuereinrichtung (10) geregelt wird, solange der mindestens eine Punkt oder der mindestens eine Abschnitt des Walzguts (8) sich vor oder in der Konti-Glühe (2) befindet.

2. Verfahren nach Anspruch 1,
wobei als Eingangsgröße (E) zusätzlich mindestens eine Prozessgröße (T, V) eines Vorprozesses (14) der Konti-Glühe verwendet wird.

3. Verfahren nach Anspruch 1 oder 2,
wobei die Eingangsgröße (E) vor der Konti-Glühe (2) gemessen wird.

4. Verfahren nach Anspruch 3,
wobei die Eingangsgröße (E) durch eine Messung der magnetischen Remanenz des Walzguts (8) ermittelt wird.

5. Verfahren nach einem der vorhergehenden Ansprüche,
wobei die Eingangsgröße (E) aus Prozessdaten (D) des Vorprozesses (14) ermittelt wird.

6. Verfahren nach einem der vorhergehenden Ansprüche,
wobei lediglich ein Bereich für die Eingangsgröße (E) bestimmt wird und die mindestens eine Prozessgröße (T, V) ausgehend vom ungünstigsten Wert im Bereich geregelt wird.

7. Verfahren nach einem der vorhergehenden Ansprüche,
wobei das computergestützte Modell (10) ein oder mehrere Modellparameter (MP) umfasst und wobei die simulierte Materialeigenschaft (ME) nach dem Konti-Glühe-Prozess gemessen wird und bei einer Abweichung der simulierten Materialeigenschaft (ME) von der gemessenen Materialeigenschaft mindestens ein Modellparameter (MP) angepasst wird.

8. Verfahren nach einem der vorhergehenden Ansprüche,
wobei als Materialeigenschaft (ME) eine Oberflächenrauhigkeit, eine Streckgrenze und/oder eine Zugfestigkeit des Walzguts (8) berechnet werden.

9. Verfahren nach einem der vorhergehenden Ansprüche,
wobei im Hinblick auf eine indirekte Bestimmung der Materialeigenschaft eine Zwischengröße mittels des Modells (10) berechnet wird, wobei die Zwischengröße mit der Materialeigenschaft korreliert ist.

10. Computerprogramm, das einen Maschinencode umfasst, der
von einer Steuereinrichtung (10) für eine Konti-Glühe (2) unmittelbar abarbeitbar ist und dessen Abarbeitung durch die Steuereinrichtung (10) bewirkt, dass die Steuereinrichtung (10) die Konti-Glühe (2) gemäß einem Verfahren mit allen Schritten des Verfahrens nach einem der vorhergehenden Ansprüche betreibt.

11. Computerprogramm nach Anspruch 10,
das auf einem Datenträger in maschinenlesbarer Form gespeichert ist.

12. Steuereinrichtung (10) für eine Konti-Glühe (2),
wobei die Steuereinrichtung (10) derart ausgebildet ist, dass sie im Betrieb ein Verfahren nach einem der Ansprüche 1 bis 9 ausführt.

13. Konti-Glühe (2), die von einer Steuereinrichtung (10) nach Anspruch 12 gesteuert wird.

## Claims

1. Method for operating a continuous annealing line (2) for the processing of a rolled good (8), especially of a metallic strip, wherein in respect of a model-predictive regulation
- at least one property of the rolled good related to at least one point or at least one section of the rolled good (8) is supplied as an input variable (E) to a computer-aided model (12), wherein the at least one point or the at least one section of the rolled good (8) is located before or in the continuous annealing line (2),
- with the aid of the computer-aided model (12), at least one material property (ME) of the rolled good (8) after the continuous annealing process is simulated,
- the simulated material property (ME) is compared with a predetermined target value (SW),
- and if the simulated material property (ME) deviates from the target value (SW), at least one process variable (T, V) of the continuous annealing process is regulated by a control device (10) for as long as the at least one point or the at least one section of the rolled good (8) is before or in the continuous annealing line (2).

2. Method according to claim 1,
wherein at least one process variable (T, V) of a prior process (14) of the continuous annealing line is additionally used as an input variable (E).

3. Method according to claim 1 or 2,
wherein the input variable (E) is measured before the continuous annealing line (2).

4. Method according to claim 3,
wherein the input variable (E) is determined by a measurement of the magnetic remanence of the rolled good (8).

5. Method according to one of the preceding claims,
wherein the input variable (E) is determined from process data (D) of the prior process (14).

6. Method according to one of the preceding claims, wherein only a range for the input variable (E) is determined and the at least one process variable (T, V) is regulated on the basis of the most unfavourable value in the range.

7. Method according to one of the preceding claims,
wherein the computer-aided model (10) comprises one or more model parameters (MP) and wherein the simulated material property (ME) is measured after the continuous annealing process and if the simulated material property (ME) deviates from the measured material property, at least one model parameter (MP) is adapted.

8. Method according to one of the preceding claims,
wherein a surface roughness, a yield strength and/or a tensile strength of the rolled good (8) are calculated as the material property (ME).

9. Method according to one of the preceding claims,
wherein, in respect of an indirect determination of the material property, an intermediate variable is calculated by means of the model (10), wherein the intermediate variable is correlated with the material property.

10. Computer program comprising machine code, which is able to be processed directly by a control device (10) for a continuous annealing line (2) and of which the processing by the control device (10) causes the control device (10) to operate the continuous annealing line (2) in accordance with a method with all steps of the method according to one of the preceding claims.

11. Computer program according to claim 10,
which is stored on a data medium in machine-readable form.

12. Control device (10) for a continuous annealing line (2), wherein the control device (10) is embodied such that, during operation, it carries out a method according to one of claims 1 to 9.

13. Continuous annealing line (2) which is controlled by a control device (10) according to claim 12.

## Revendications

1. Procédé pour faire fonctionner une installation (2) de recuit en continu pour le traitement d'un produit (8) à laminer, notamment d'un feuillard métallique, dans lequel, au vue d'une régulation prédictive par modèle,
- on envoie, comme grandeur (E) d'entrée, au moins une propriété du produit à laminer, se rapportant à au moins un point ou à au moins un tronçon du produit (8) à laminer, à un modèle (12) assisté par ordinateur, le au moins un point ou le au moins un tronçon du produit (8) à laminer se trouvant avant ou dans l'installation (2) de recuit en continu,
- à l'aide du modèle (12) assisté par ordinateur, on simule au moins une propriété (ME) de matière du produit (8) à laminer après l'opération de recuit en continu,
- on compare la propriété (ME) de matière simulée à une valeur (SW) de consigne donnée à l'avance,
- et s'il y a des écarts de la propriété (ME) de matière simulée à la valeur (SW) de consigne, on régule au moins une grandeur (T, V) opérationnelle de l'opération de recuit en continu par un dispositif de commande, tant que le au moins un point ou le au moins un tronçon du produit (8) à laminer se trouve avant ou dans l'installation (2) de recuit en continu.

2. Procédé suivant la revendication 1,
dans lequel on utilise comme grandeur (E) d'entrée en outre au moins une grandeur (T, V) opérationnelle d'une opération (14) antérieure de l'installation de recuit en continu.

3. Procédé suivant la revendication 1 ou 2,
dans lequel on mesure la grandeur (E) d'entrée avant l'installation (2) de recuit en continu.

4. Procédé suivant la revendication 3,
dans lequel on détermine la grandeur (E) d'entrée en mesurant la rémanence magnétique du produit (8) à laminer.

5. Procédé suivant l'une des revendications précédentes,
dans lequel on détermine la grandeur (E) d'entrée à partir de données opératoires de l'opération (14) antérieure.

6. Procédé suivant l'une des revendications précédentes,
dans lequel on détermine simplement une plage de la grandeur (E) d'entrée et on régule dans la plage la au moins une grandeur (T, V) opérationnelle à partir de la valeur défavorable.

7. Procédé suivant l'une des revendications précédentes,
dans lequel le modèle (10) assisté par ordinateur comprend un ou plusieurs paramètres (MP) de modèle et dans lequel on mesure la propriété (ME) de matière simulée après l'opération de recuit en continu et, si la propriété (ME) de matière simulée s'écarte de la propriété de matière mesurée, on adapte au moins un paramètre (MP) du modèle.

8. Procédé suivant l'une des revendications précédentes,
dans lequel on calcule comme propriété (ME) de matière une rugosité de surface, une limite élastique apparente et/ou une résistance à la traction du produit (8) à laminer.

9. Procédé suivant l'une des revendications précédentes,
dans lequel, en vue de déterminer indirectement la propriété de matière, on calcule une grandeur intermédiaire au moyen du modèle (10), la grandeur intermédiaire étant en corrélation avec la propriété de matière.

10. Programme d'ordinateur qui comprend un code machine, lequel peut être exécuté directement par un dispositif (10) de commande d'une installation (2) de recuit en continu et dont l'exécution par le dispositif (10) de commande fait que le dispositif (10) de commande fait fonctionner l'installation (2) de recuit en continu selon un procédé ayant tous les stades du procédé suivant l'une quelconque des revendications précédentes.

11. Programme d'ordinateur suivant la revendication 10,
qui est mémorisé sur un support de données sous une forme pouvant être exécutée par un ordinateur.

12. Dispositif (10) de commande d'une installation (2) de recuit en continu, dans lequel le dispositif (10) de commande est constitué de manière à exécuter en fonctionnement un procédé suivant l'une des revendications 1 à 9.

13. Installation (2) de recuit en continu qui est commandée par un dispositif (10) de commande suivant la revendication 12.
